# EUROPEAN PATENT APPLICATION

(11) **EP 1 712 966 A2**
(43) Date of publication of application: **18.10.2006**
(21) Application number: 06251454.2
(22) Date of filing: 17.03.2006
(51) Int. Cl.: G05B 19/408

(54) **Program conversion apparatus**

(30) Priority: 12.04.2005 JP 2005114522
(71) Applicant: FANUC LTD, Minamitsuru-gun, Yamanashi 401-0597 (JP)
(72) Inventor: Ogata, Toshiyuki, c/o Room 8-205, FANUC, Minamitsuru-gun, Yamanashi 401-0511 (JP); Takagi, Shigetoshi, c/o FANUC, Minamitsuru-gun, Yamanashi 401-0511 (JP)
(74) Representative: Billington, Lawrence Emlyn

(57) **Abstract**

Analyzing blocks of a conversion source program one block by one block, a function directed by one or more blocks are extracted. Then one or more blocks in a conversion destination program, which correspond to the extracted function, is extracted. In this manner, the conversion source program is converted. The one or more blocks in the conversion source program and the one or more blocks in the conversion destination program, which correspond to the function, are displayed side by side on a screen so as to allow an operator to easily recognize the correspondence between them.

## Description

### BACKGROUND OF THE INVENTION

### 1. Field of the Invention

Thepresent invention relates to a program conversion apparatus, and particularly to a program conversion apparatus for converting a processing program used in a processing machine such as a wire cut electrical discharge machine.

### 2. Description of the Related Art

In a processing machine such as a wire cut electrical discharge machine, an NC program is used to issue a command to carry out processing operation of the processing machine. The NC programs which issue a command to carry out the processing operation vary depending on wire cut electrical discharge machines, and are not compatible with one another. Therefore, a user who owns wire cut electrical discharge machines, which are produced by a plurality of different manufacturers, has to prepare the NC programs corresponding to the manufacturers.

As a method to resolve such a problem, there has been conventionally known a function of converting the NC programs. However, the forms of commands of the NC programs are significantly different in accordance with the manufacturers, thus the conversion of the NC programs is not sufficient and has not been utilized widely.

As a conventionally known program conversion method, there is known a method of converting a processing program for turret punch press into a processing program for laser processing. In this program conversion method, a processing program for turret punch press in which a processing shape is set beforehand is converted into a processing program for performing processing of the shape by means of laser processing, a processing path in the laser processing is generated in accordance with the processing program, and a sub routine for program conversion is prepared in response to the turret punch press processing (see Japanese Patent Application Laid-Open No. 62-292290).

Furthermore, in an NC machine tool, there is disclosed that a program for old model of machines is converted into a program for new model of machines, whereby the programs are made compatible among similar models of machines. In such conversion, the name of machines and commands are related to a table memory and stored, a program as a conversion source is converted into a program as a conversion destination by converting a character string. Moreover, in this program conversion, there is disposed that the program as the conversion source and the program as the conversion destination are displayed side by side in contrast with each other (see Japanese Patent Application Laid-Open No. 61-25212).

There is also known a conversion method in which, in a numerical control device inwhich theNC data formats are different, a conversion table is used to convert NC data having an executable format is converted into NC data of other type (see Japanese Patent Application Laid-Open No. S62-267804).

In the conventionally proposed program conversion methods, there is a method of converting a certain character string into other character string using a conversion table or the like, wherein a command from a conversion source program is simply converted into a command of a conversion destination program. Therefore, when the form of a command used in the conversion source program and the form of a command used in the conversion destination program are related to each other, conversion can be performed preferably. However, usually one command from the conversion source program is not necessarily related to one command from the conversion destination program in terms of the forms. For this reason, there is a problem that conversion cannot be performed sufficiently by simply converting commands.

For example, in the case of executing one command of the conversion source program only by combining a plurality of commands in the conversion destination program, such operation cannot respond to the simple conversion of commands, such as executing a plurality of commands of the conversion source program by means of one command of the conversion destination program.

Moreover, in program conversion, conversion is confirmed by mostly displaying only results of conversion on a screen. In this manner, in the case of simply displaying only a converted program, there is a problem that a state of conversion cannot be perceived when comparing the conversion source program and the converted program to each other.

Regarding such display in program conversion, the abovementioned Japanese Patent Application Laid-Open No. 61-25212 describes that the conversion source program and the converted program are displayed side by side in contrast with each other. However, in such contrastive display only two programs are displayed side by side.

When the programs are converted, the number of blocks describing a command of the conversion source program does not necessarily match with the number of blocks describing a command of the conversion destination program. For example, there are cases in which one block in the conversion source program is converted into a plurality of blocks in the conversion destination program, a plurality of blocks in the conversion source program are converted into one block in the conversion destination program, or n numbers of blocks of the conversion source program are converted into a plurality of blocks in different number. Therefore, when the number of blocks is changed between the conversion source program and the conversion destination program, there is a problem that it is difficult to confirm the relationship between the conversion source program and the conversion destination program in terms of the same type of commands.

### SUMMARY OF THE INVENTION

In a program conversion apparatus of the present invention, simple conversion of commands is not performed, but instead, a function of a command described in a conversion source program is analyzed, and a command to realize the function by means of a conversion destination program is extracted, whereby conversion into an NC program by means of a format of the conversion destination program is performed.

The program conversion apparatus of the present invention is a program conversion apparatus for converting a first NC program for processing a workpiece using a first processing machine into a second NC program for processing the workpiece using a second processing machine, the program conversion apparatus comprising analysis means for analyzing the first NC program, and conversion means for converting the first NC program into the second NC program on the basis of an analysis result obtained from the analysis means.

The analysis means is to analyze one or a plurality of blocks of the first NC program. In this analysis, the analysis means analyzes the blocks of the first NC program one by one to extract a function directed by the block, and extracts a command corresponding to the function in the second NC program. The conversion means converts the block of the first NC program into a block of the second NC program by means of the command extracted by the analysis means.

Further, the program conversion apparatus of the present invention displays the block of a conversion source program and block of a converted program side by side on the same screen, with provision of a blank line therebetween.

The program conversion apparatus comprises display means for displaying the first NC program before conversion and the converted NC program.

The display means of the present invention displays one or a plurality of blocks of the first NC program before conversion and one or a plurality of blocks of the second NC program after conversion corresponding to the blocks of the first NC program, on a display screen so as to relate the blocks to each other.

In a first example of the comparison display, when one block of the first NC program before conversion corresponds to a plurality of blocks of the second NC program after conversion, the one block of the first NC program before conversion and the first block of the plurality of blocks of the second NC program after conversion are displayed on the same level on the display screen, and blank lines in the number corresponding to at least the number of the plurality of blocks of the second NC program after conversion are disposed in an area following the one block of the first NC program before conversion.

In a second embodiment of the comparison display, when the plurality of blocks of the first NC program before conversion correspond to one block of the second NC program after conversion, the first block of the plurality of blocks of the first NC program before conversion and a display position of the one block of the second NC program after conversion are displayed on the same level on the display screen, and blank lines in the number corresponding to at least the number of the plurality of blocks of the first NC program before conversion are disposed in an area below the one block of the second NC program after conversion.

In a third embodiment of the comparison display, when a plurality of blocks of the first NC program before conversion correspond to a plurality of blocks of the second NC program after conversion, the first block of the plurality of blocks before conversion and the first block of the plurality of blocks after conversion are displayed on the same level on the display screen, and blank lines in the number corresponding to the difference between the number of blocks before conversion and the number of blocks after conversion are disposed in any one of the blocks after conversion and the blocks before conversion, whichever is less in number.

Further, the analysis means of the present invention causes the display means to display an error or a message.

When various command codes for generating the blocks of the second NC program after conversion do not have a function included in the blocks of the first NC program before conversion or an equivalent function, the analysis means judges that processing is not performed on the blocks or that processing is not performed properly on the blocks, and causes the display means to display an error indication in relation to such blocks.

Furthermore, a function of the block of the first NC program before conversion and a function of the block of the secondNC program after conversion are equivalent, and the processing is performed properly thereon, but sometimes the detail of the block of the first NC program before conversion and the detail of the block of the second NC program after conversion are different. In this case, analysis means causes the display means to display a message indicating that the blocks before conversion and/or blocks after conversion are processed properly but the detail of at least any one of the blocks of the program after conversion is different from the detail of the blocks of the program before conversion.

The display means further displays the error or message in a pattern different from when other display is performed. The display pattern can include a color, font, character size, decoration of characters, or a combination thereof, and is instructed by providing a display attribute.

The display attribute can be a display pattern corresponding to the displayed detail by providing an error, message, or the like, or can be a display pattern corresponding to a command code by providing it to command code.

Moreover, the second NC program after conversion is editable, and the display means displays the state of the second NC program before editing and after editing in contrast with the first NC program before conversion.

The program conversion apparatus can be incorporated in not only an electrical discharge machine but also in a general purpose personal computer.

According to the present invention, even when one command of the conversion source program and one command of the conversion destination program are not related to each other, program conversion can be carried out.

In program conversion, the relationship between one or more blocks in the conversion source program and one or more blocks in the conversion destination program can be perceived preferably.

On the other hand, when a function corresponding to the function of the command of the conversion source program does not exist in the conversion destination program, such fact is notified in the form of display.

According to the present invention, the block of the conversion source program and block of the converted program are displayed on the same screen, with provision of a blank line therebetween, whereby the relationship between the blocks can be perceived easily. Therefore, one or more blocks corresponding to one function in the program before conversion and one or more blocks corresponding to the function in the converted program are displayed on the screen in a corresponding pattern, thus the relationship between the block of the program before conversion and the block of the program after conversion, with the function disposed therebetween, can be easily confirmed.

### BRIEF DESCRIPTION OF THE DRAWINGS

The above-described and other objects and characteristics of the present invention are made apparent in the description of the embodiments below with reference to the attached diagrams, in which:
Fig. 1 is a flowchart for explaining an outline of operation of program conversion performed by the program conversion apparatus of the present invention;
Fig. 2 is a figure for explaining a first analysis pattern of program conversion according to the present invention;
Fig. 3 is a figure for explaining a second analysis pattern of program conversion according to the present invention;
Fig. 4 is a figure for explaining a third analysis pattern of program conversion according to the present invention;
Fig. 5 is a figure for explaining a fourth analysis pattern of program conversion according to the present invention;
Fig. 6 is a figure for explaining operation in a case where the conversion destination program does not have a function corresponding to a function that the block of a conversion source program has;
Figs. 7A and 7B are figures for explaining a first comparison display pattern of program conversion according to the present invention;
Figs. 8A and 8B are figures for explaining a second comparison display pattern of program conversion according to the present invention;
Figs. 9A and 9B are figures for explaining a third comparison display pattern of program conversion according to the present invention;
Figs. 10A and 10B are figures for explaining a combination of the first through third comparison display patterns of program conversion according to the present invention;
Fig. 11 is a block diagram for explaining a configuration of the program conversion apparatus of the present invention;
Fig. 12 is a functional block diagram for explaining operations such as analyzing, converting, and the like performed in program conversion according to the present invention;
Fig. 13 is a flowchart for explaining analysis, conversion operation, and comparison display operation of the program conversion apparatus of the present invention;
Fig. 14 is a figure for explaining an example of processing performed by a processing program;
Fig. 15 is a figure showing the conversion source program and a converted program; and
Fig. 16 is a figure in which the conversion source program and the converted program are compared with each other and displayed by means of blocks arranged in the program of Fig. 15.
Fig. 17 is a figure showing one modification of comparison display of Fig. 16.

### DETAILED DESCRIPTION OF THE PREFERRED EMBODIMENTS

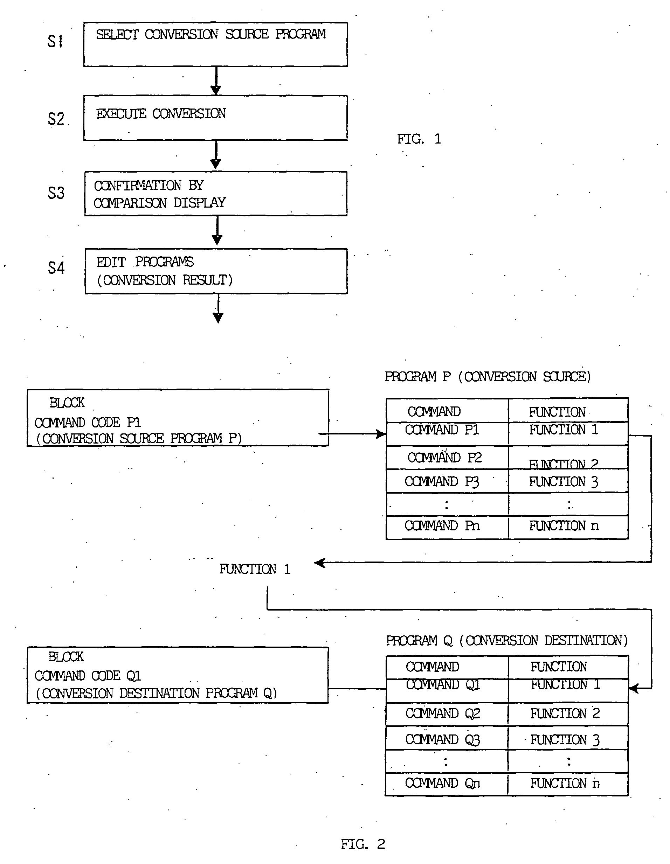

Fig. 1 is a flowchart for explaining program conversion operation performed by the program conversion apparatus of the present invention.

The program conversion apparatus of the present invention converts an NC program as a conversion source to generate an NC program af ter convers ion by performing schematic operation described hereinafter.

The program conversion apparatus selects the conversion source NC program and selects an NC program as a conversion destination which causes a processing machine to operate (step S1) . The program conversion apparatus extracts a function by analyzing each of blocks of the conversion source program which is input, extracts a function corresponding to the program type of the conversion destination program, and generates an NC program in the form of the conversion destination program, thereby performing program conversion (step S2). The converted NC program is displayed by the display means. In this display, the NC program before conversion and the NC program after conversion are compared to each other and displayed, whereby conversion is confirmed (step S3). The converted NC program can be edited according to the need (step S4).

Here, in the conversion operation process in step S2, the first characteristic is that the program conversion apparatus of the present invention analyzes each of the blocks of the conversion source program to extract the function, and conversion into the conversion destination program is performed on the basis of the extracted function. Accordingly, oneorapluralityof command codes of the conversion source program can be replaced with one or a plurality of command codes of the conversion destination program; which could not be performed simply by replacing one command code of the conversion source program with one command code of the conversion destination program.

Further, in the comparison display process in step S3, the second characteristic is that the program conversion apparatus of the present invention can conform the block of the conversion source program to the block of the conversion destination program for a corresponding function on the display screen. Accordingly, the relationship between one or more blocks in the conversion source program and one or more blocks in the conversion destination program can be perceived easily for every function of the programs.

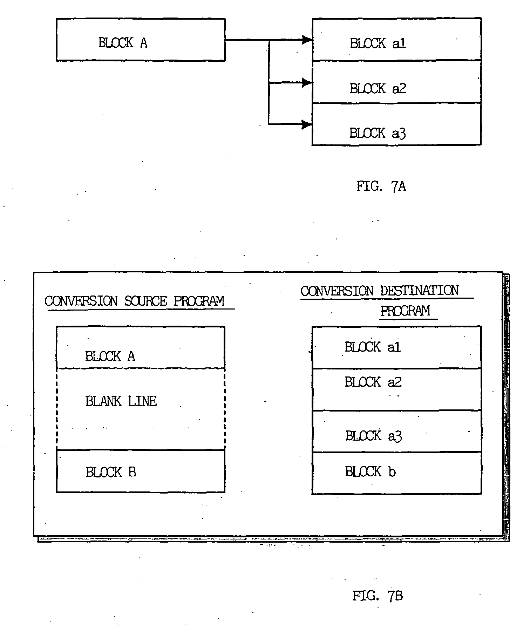

Hereinafter, each embodiment of the conversion, which is the abovementioned first characteristic of the present invention, is described with reference to Fig. 2 through Fig. 6, and each embodiment of the comparison display, which is the abovementioned second characteristic of the present invention, is described with reference to Fig. 7 through Fig. 10.

For each program which is the target of program conversion, the program conversion apparatus stores a command code and function used in the program. For example, when the conversion source program is taken as a program P and the conversion destination program is taken as program Q, the program conversion apparatus relates a command code and function of the program P to a command code and function of the program Q, and stores the relationship in storage means or the like.

The program conversion uses the relationship between command code and the function to convert one or more blocks of the conversion source program into one or more blocks of the conversion destination program. In this program conversion, there are cases in which one block of the conversion source program is converted into one block in the conversion destination program, one block of the conversion source program is converted into a plurality of blocks in the conversion destination program, a plurality of blocks in the conversion source program are converted into one block in the conversion destination program, and a plurality of blocks of the conversion source program are converted into a plurality of blocks in the conversion destination program.

Fig. 2 is a figure for explaining a first analysis pattern of program conversion according to the present invention. The first analysis pattern shows the case in which one block of the conversion source program is converted into one block of the conversion destination program.

One block in the conversion source program (here, the program P as the conversion source program) is analyzed, and, when a command code (here, command code P1) is described in the block, a function denoted by command code P1 (here, function 1) is extracted on the basis of the relationship between command code and function used in the program.

Next, for the extracted function 1, a command code corresponding to the function 1 (here, command code Q1) is extracted on the basis of the relationship between command code and function used in the conversion destination program. At this moment, command code P1 in the conversion source program and command code Q1 in the conversion destination program relate to each other one-on-one via the function 1, thus one block of the conversion destination program is generated by command code Q1. Accordingly, one block of the conversion source program is converted into one block of the conversion destination program.

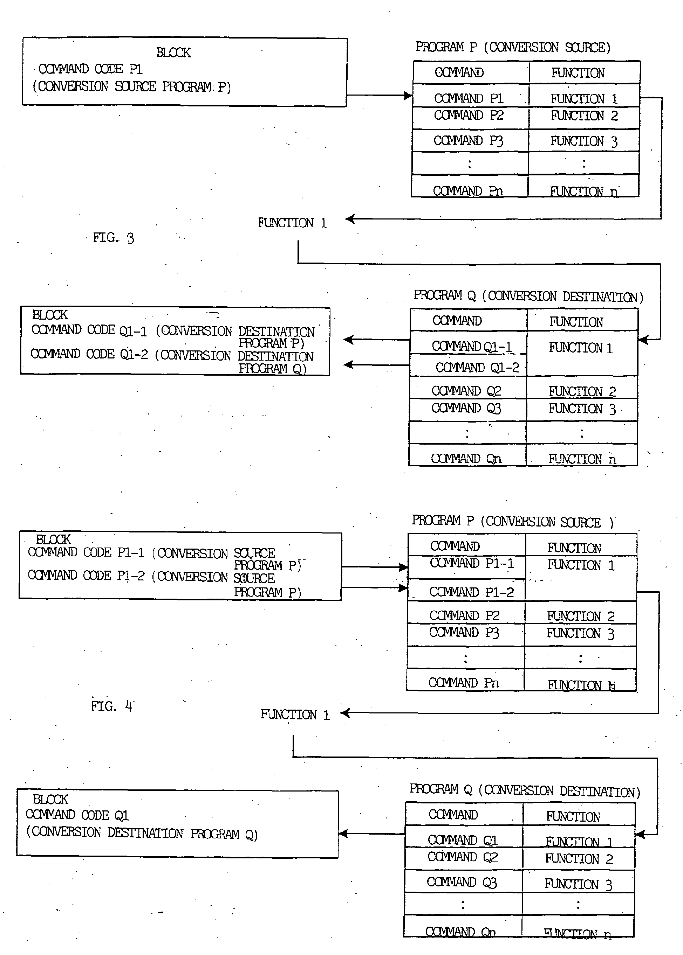

Fig. 3 is a figure for explaining a second analysis pattern of program conversion according to the present invention. The second analysis pattern shows the case in which one block of the conversion source program is converted into a plurality of blocks in the conversion destination program.

One block in the conversion source program P is analyzed, and, when command code P1 is described in the block, a function 1 denoted by command code P1 is extracted on the basis of the relationship between command code and function used in the program.

Next, for the extracted function 1, command codes corresponding to the function 1 (here, command code Q1-1 and a command code Q1-2) are extracted on the basis of the relationship between command code and function used in the conversion destination program. At this moment, command code P1 (one command code) in the conversion source program and command code Q1-1 and command code Q1-2 (two command codes) in the conversion destination program relate to each other via the function 1, thus a block of the conversion destination program is generated by command code Q1-1 and command code Q1-2 . Accordingly, one block of the conversion source program is converted into two blocks of the conversion destination program.

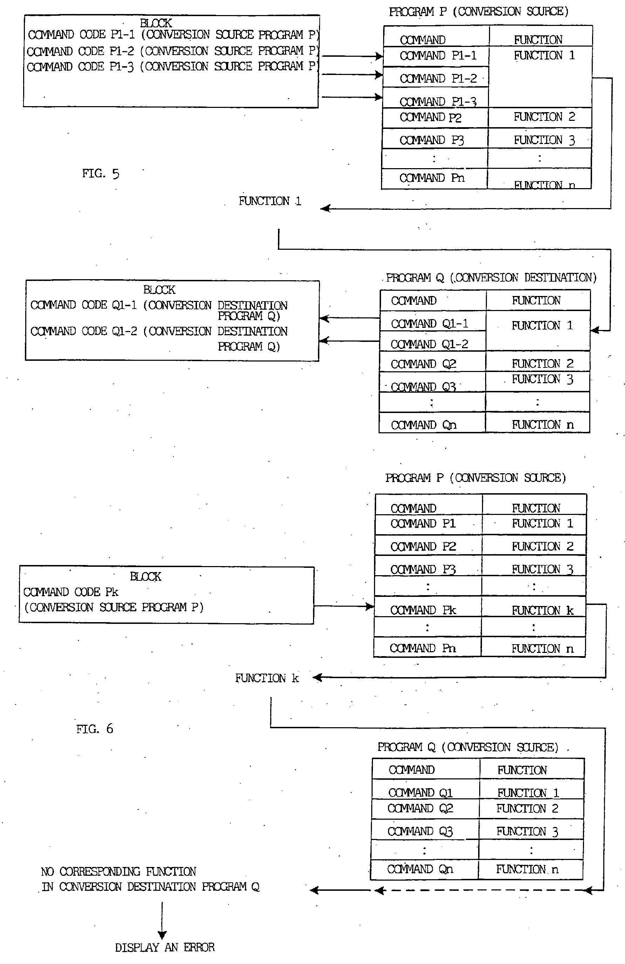

Fig. 4 is a figure for explaining a third analysis pattern of program conversion according to the present invention. The third analysis pattern shows the case in which a plurality of blocks of the conversion source program are converted into one block of the conversion destination program.

Two blocks in the conversion source program P are analyzed, and, when a command code P1-1 and a command code P1-2 are described in the two blocks, a function 1 denoted by command code P1-1 and command code P1-2 is extracted on the basis of the relationship between command codes and function used in the program.

Next, for the extracted function 1, command code Q1 corresponding to the function 1 is extracted on the basis of the relationship between command code and function used in the conversion destination program. At this moment, command code P1-1 and command code P1-2 (two command codes) in the conversion source program and command code Q1 (one command code) in the conversion destination program relate to each other via the function 1, thus one block of the conversion destination program is generated by command code Q1. Accordingly, two blocks of the conversion source program are converted into one block of the conversion destination program.

Fig. 5 is a figure for explaining a fourth analysis pattern of program conversion according to the present invention. The fourth analysis pattern shows the case in which a plurality of blocks of the conversion source program are converted into a plurality of blocks of the conversion destination program.

Three blocks in the conversion source program P are analyzed, and, when command code P1-1, command code P1-2 , and a command code P1-3 are described in the three blocks, a function 1 denoted by command code P1-1, command code P1-2 , command code P1-3 is extracted on the basis of the relationship between command codes and function used in the program.

Next, for the extracted function 1, command code Q1-1 and command code Q1-2 corresponding to the function 1 are extracted on the basis of the relationship between command codes and function used in the conversion destination program. At this moment, command code P1-1, command code P1-2 , and command code P1-3 (three command codes) in the conversion source program and command code Q1-1 and command code Q1-2 (two command codes) in the conversion destination program relate to each other via the function 1, thus two blocks of the conversion destination program are generated by command code Q1-1 and command code Q1-2. Accordingly, three blocks of the conversion source program are converted into two blocks of the conversion destination program.

Fig. 6 is a figure for explaining operation of a case in which the conversion destination program does not have a function corresponding to a function that the block of the conversion source program has.

A block in the conversion source program P are analyzed, and, when a command code Pk is described in the blocks, a function k denoted by command code Pk is extracted on the basis of the relationship between command code and function used in the program.

Next, for the extracted function k, a command code corresponding to the function k is searched on the basis of the relationship between command code and function used in the conversion destination program. At this moment, sometimes the corresponding function does not exist in the conversion destination program. In this case, the corresponding command code cannot be extracted, thus an error explaining that the corresponding function does not exist in the conversion destination program is displayed, and the error is notified to an operator.

Next, each of examples of comparison display of the present invention is described.

The program conversion apparatus compares and displays the block of the conversion source program and the block of the conversion destination program in relation to each example in the abovementioned block conversion.

In the comparison display, when one block of the conversion source program is converted into a plurality of blocks in the conversion destination program, when a plurality of blocks of the conversion source program are converted into one block in the conversion destination program, and when a plurality of blocks of the conversions source program are converted into a plurality of blocks in the conversion destination program, the corresponding blocks are displayed on a display screen so that the levels of the blocks are the same, with provision of blank lines therebetween. Each of the cases is described hereinafter.

Fig. 7AandFig. 7B are figures for explaining a first comparison display pattern of program conversion according to the present invention. The first comparison display pattern shows the case in which one block of the conversion source is converted into one block in the conversion destination program.

When a block A of the conversion source program is converted into blocks a1, a2, and a3 in the conversion destination program (Fig. 7A), the block A of the conversion source program and the blocks a1, a2, and a3 of the conversion destination program are arranged side by side and displayed on the display screen. At this moment, the number of blocks in the conversion source program is "1, "while the number of blocks in the conversion destination program is "3, "thus the blank lines are provided and displayed on the block A of the conversion source program in which the number of blocks is less (Fig. 7B).

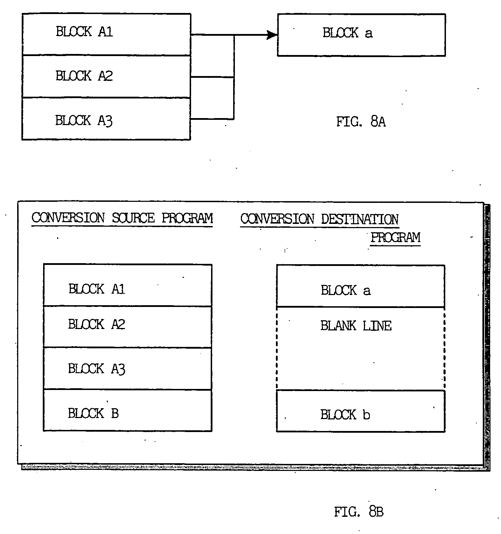

Fig. 8A and Fig. 8B are figures for explaining a second comparison display pattern of program conversion according to the present invention. The second comparison display pattern shows an example in which three blocks of the conversion source program are converted into one block in the conversion destination program.

When blocks A1, A2, and A3 of the conversion source program are converted into a block a in the conversion destination program (Fig. 8A), the blocks A1, A2, and A3 of the conversion source program and the block a of the conversion destination program are arranged side by side and displayed on the display screen. At this moment, the number of blocks in the conversion source program is "3, " while the number of blocks in the conversion destination program is "1, " thus the blank lines are provided and displayed on the block a of the conversion destination program in which the number of blocks is less (Fig. 8B).

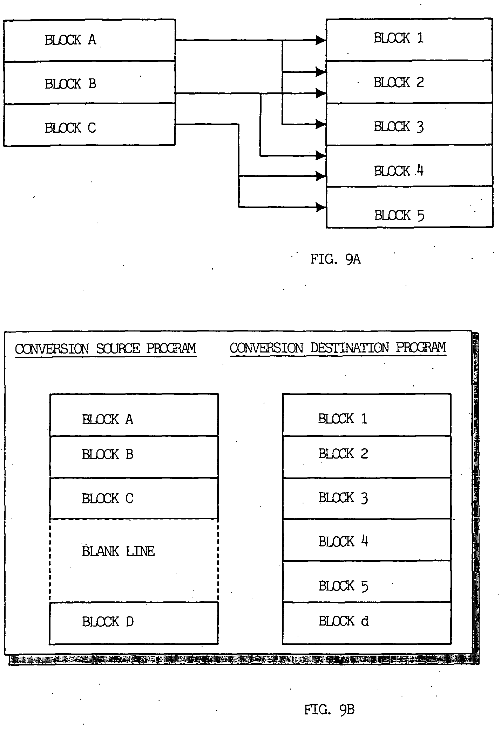

Fig. 9AandFig. 9B are figures for explaining a third comparison display pattern of program conversion according to the present invention. The third comparison display pattern shows an example in which three blocks of the conversion source program are converted into five blocks in the conversion destination program.

When the block A of the conversion source program is converted into blocks 1, 2, and 3 in the conversion destination program, when a block B of the conversion source program is converted into blocks 2 and 4 in the conversion destination program, and when a block C is converted into blocks 4 and 5 in the conversion destination program (Fig. 9A), the blocks A, B, and C of the conversion source program and the blocks 1 through 5 of the conversion destination program are arranged side by side and displayed on the display screen. At this moment, the number of blocks in the conversion source program is "3," while the number of blocks in the conversion destination program is "5," thus the blank lines are provided and displayed on the blocks A, B, and C of the conversion source program in which the number of blocks is less (Fig. 9B).

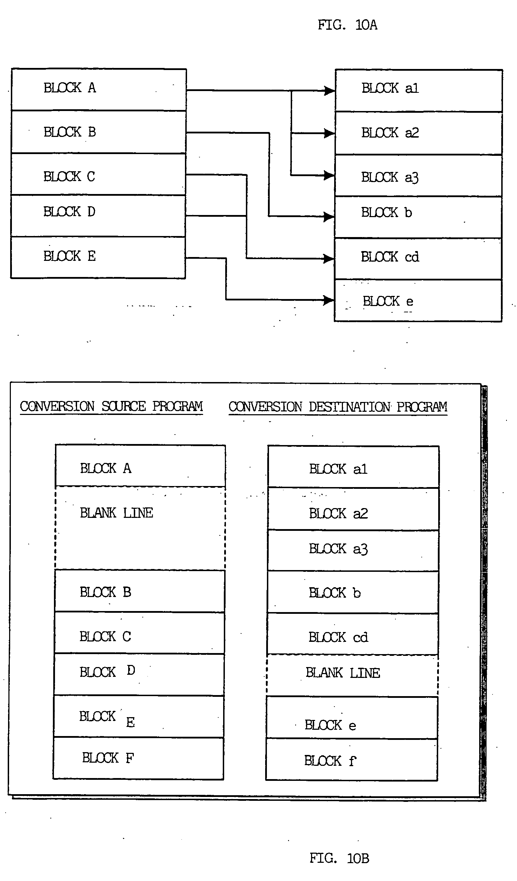

Fig. 10A and Fig. 10B are figures for explaining a combination of the first through third comparison display patterns of program conversion according to the present invention. Here, the figures show a case in which the block A is converted into the blocks a1 through a3, the block B is converted into a block b, the blocks C and D are converted into a block cd, and a block E is converted into a block e (Fig. 10A).

In this comparison display example, a blank line is provided in the block A of the conversion source program in order to show the relationship between the block A (one block) and blocks a1 through a3 (three blocks), and a blank line is provided in the block cd of the conversion destination program in order to show the relationship between the blocks C and D (two blocks) and the block cd (one block) (Fig. 10B).

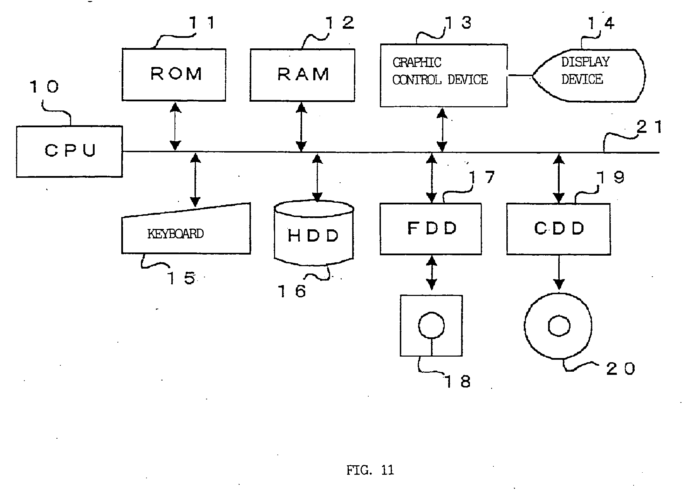

Next, a configuration of the program conversion apparatus of the present invention is explained with reference to the block diagram of Fig. 11.

In Fig. 11, a ROM 11, RAM 12, display control device (graphic control device) 13, keyboard 15, hard disk drive (HDD) 16, floppy disk drive (FDD) 17, and compact disk drive (CDD) 19 are connected to a processor (CPU) 10 via a bus 21. The processor (CPU) 10 controls the program conversion apparatus on the basis of a system program stored in the ROM 11. The RAM 12 is used for temporarily storing data and for storing the conversion source program and conversion destination program.

The display control device 13 converts display data received from the processor (CPU) 10 into a display signal, and sends the display signal to a display device 14. The display device 14 receives the display signal and displays the display signal on a screen. A CRT, liquid crystal display device, or the like is used as the display device 14. The keyboard 15 comprises an operation key used for inputting data or command, a function key, and the like. The hard drive disk (HDD) 16 stores therein data to be saved even after power shutdown occurs in a converted program or the like. Further, the floppy disk drive (FDD) 17 reads data stored in a floppy disk 18, and writes the converted program. The CD drive (CDD) writes the converted program into a compact disk 20 such as a CD-R, CD-RW, or the like.

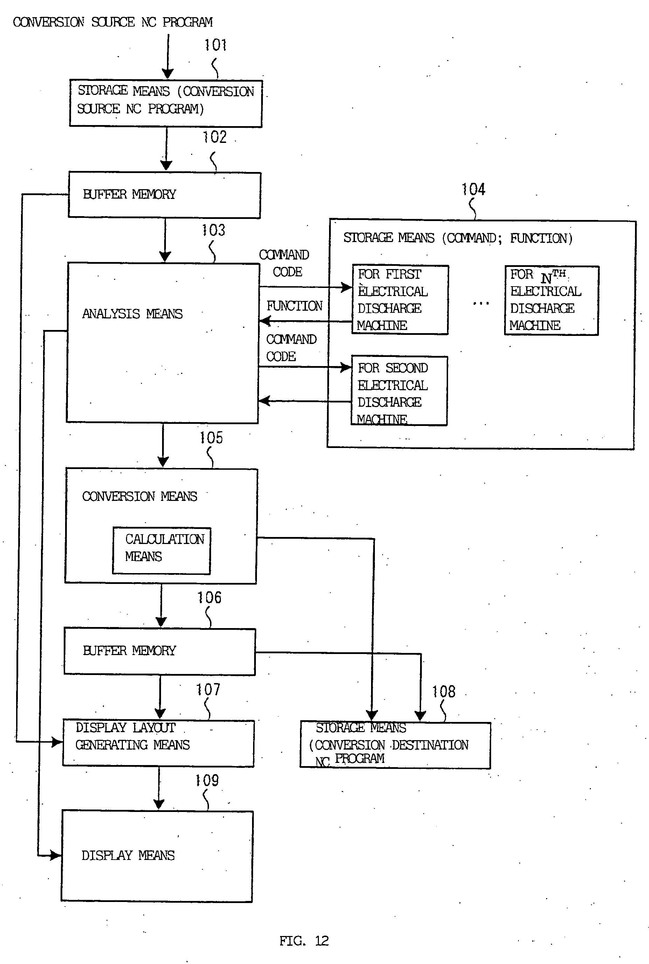

Fig. 12 is a functional block diagram for explaining operations such as analyzing, converting, and the like performed in program conversion according to the present invention.

In Fig. 12, an input conversion source program is stored in storage means 101. The conversion source program is read in terms of block unit by the storage means 101. It should be noted at this moment that the blocks may be read sequentially from the storage means 101, or may be sequentially read via a buffer memory 102.

Analysis means 103 analyzes the read blocks. When analyzing, a command code, a designation of a machine, a parameter, or a numerical value described in the blocks is extracted. The analysis means 103 extracts a function denoted by an extracted command code, by referring to the relationship between command code and function used in the conversion destination program and stored in storage means 104.

Moreover, the analysis means 103 refers to the relationship between a command code and function used in the conversion destination program and stored in the storage means 104, and searches a command code corresponding to an extracted function.

Conversion means 105 uses command code used in the conversion destination program and extracted by the analysis means 103, performs predetermined calculation when conversion of the parameter or numerical value is necessary, generates and converts the corresponding blocks.

The convertedblocks are sequentially stored in abuffermemory 106. A display layout generating means 107 generates a layout in order to compare and display conversion destination blocks stored sequentially in the buffer memory 106 and blocks of the conversion source program stored in the buffer memory 102, in the display means. At this moment, in order to relate the blocks in terms of block unit, blank lines are provided in the insufficient blocks. The display layout generating means 107 compares and displays the conversion source program and the conversion destination program, on display means 109.

Storage means 108 introduces the converted blocks from the conversionmeans 105 or the buffer memory 106, and stores the converted blocks as the conversion destination program.

It should be noted that not only display of characters is possible, but also processing operation of the converted NC program, in other words, rendering a tool path of a machine tool, a wire path of a wire cut electrical discharge machine and the like is also possible. Moreover, the displayed conversion program can be edited by operating the keyboard.

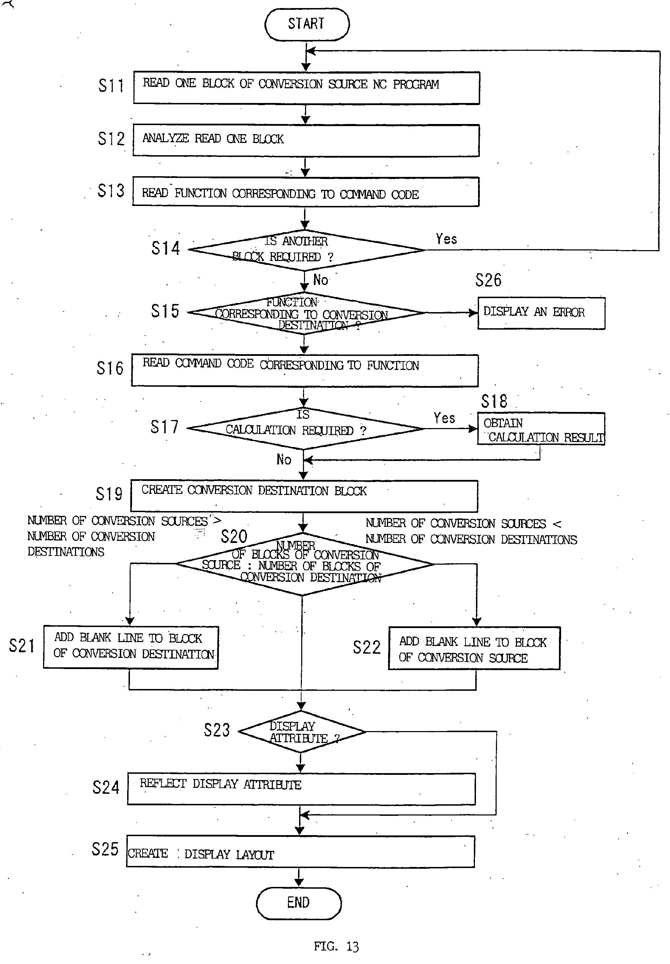

Fig. 13 is a flowchart for explaining analysis, conversion operation, and comparison display operation of the program conversion apparatus of the present invention.

One block is read from the conversion source program (step S11), and the read one block is analyzed (step S12). A command code described in the one block by analysis is read, and a function corresponding to the command is extracted (step S13). When the extracted function is formed by a plurality of blocks of the conversion source program, the step returns to the step S11 and step S12, and the next block of the conversion source program is read and analyzed (step S14).

It is judged whether the extracted function is present in a command code used in the conversion destination program (step S15) . In this judgment, when it is judged that the corresponding unction does not exist, an error or a message is displayed (step S26).

In the judgment of the step S14, when it is judged that the corresponding function is present in the conversion destination program, a command code corresponding to the function in the conversion destination program is read (step S16). Moreover, when calculation by means of the numerical value, parameter, or the like described in the block is necessary (step S17), the calculation is performed to obtain a calculation result (step S18).

A block of conversion destination program is created using the extracted command code and calculation result of the conversion destination (step S19).

For the converted blocks, the following steps S20 through S25 are performed to carry out the processing of comparison display. In a common function the number of blocks of the conversion source program and the number of blocks of the conversion destinationprogram are compared with each other (step S20).

When comparing the number of blocks, when the number of blocks of the conversion source program is larger than the number of blocks of the conversion destination program, the difference between the numbers of blocks is obtained, and blank lines corresponding to the amount of the difference are provided in the conversion destination blocks (step S21). When the number of blocks of the conversion destination program is larger than the number of blocks of the conversion source program, the difference between the numbers of blocks is obtained, and blank lines corresponding to the amount of the difference are provided in the blocks of the conversion source program (step S22).

Furthermore, when a display attribute is set in a command code (step S23), the display attribute is reflected (step S24), and a display layout is created (step S25).

Accordingly, the conversion source program and the conversion destination program can be compared with each other and displayed, with the blocks respectively having the corresponding functions, as units. Moreover, when the display attributes such as command code and the like are set, the conversion source program and the conversion destination program can be displayed by means of a color, font, character size, character thickness, decoration of characters (slanted characters or underlined characters), or a combination of these, on the basis of the display attributes.

When the display attribute is set when displaying an error or a message, display is performed with the set display attribute. The initial value of the display attribute is set to, for example, "green/standard thickness, "and the display attributes such as the color, font, character size, character thickness, decoration of characters (slanted characters or underlined characters) can be changed according to the need.

The following table is an example of the display attributes.

| No. | Command Code | Display Attribute |
|---|---|---|
| 1 | D | Green/thickness in the table |
| 2 | G | Green/thickness in the table |
| 3 | M | Green/thickness in the table |
| 4 | X/Y/Z | Green/thickness in the table |
| 5 | ... | Green/thickness in the table |
| 6 | ... | Green/thickness in the table |
| | | |

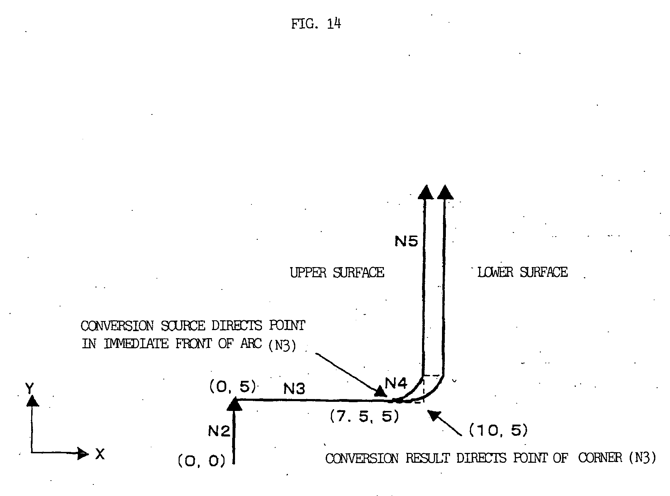

Next, an example of conversion is explained. Hereinafter, as the example of conversion, an example in which the same corner radius R at top and bottom is processed by taper machining is described using Fig. 14.

The following is an example of the conversion source program.

| | |
|---|---|
| N2 | G90 G01 G42 X0. Y5. |
| N3 | X7.5 Y5. |
| N4 | G03 X10. Y7.5 I0. J2.5 A-10. G87 |
| N5 | G01 X10. Y22.5 |
| ... | |

In the block N2 of the conversion source program, processing is performed by linear interpolation using a command code (G01) until the position of X = 0, Y = 5 specified with an absolute value command code (G90) is reached. At the same time, a command code G42 is used to offset a wire about the length of the radius of the wire to the right, facing the traveling direction. It should be noted here that the offset amount is specified separately.

Next, in the block N3, command code for linear interpolation (G01) is used to perform processing until the position of X = 7.5, Y = 5 is reached. It should be noted that command codes G90, G01, and G42 are modal (continuously effective), and thus are omitted in this block.

Next, in the block N4, a command code for counter clockwise circular interpolation (G03) is used to perform processing until the position of x = 10, Y = 7.5 is reached. It should be noted that command codes 10. and J2 . 5 are used to command to specify a central position, which is viewed from the starting point of the arc, using a relative value. I is a command code along the X axis, and J is a command code along the Y axis. Specifically, the center of the arc is the point where X = 7.5 and Y = 7.5, which is 2.5 away in the plus direction of the Y axis from the starting position where X = 7.5 and Y = 5. It should be noted that the radius is 2.5.

Furthermore, a taper angle of 10 degrees is specified by A-10.. When this taper angle is a minus value, the upper side of the wire is controlled to incline to the left.

Since the top and bottom radius R is equally specified by command code G87, an arc in which the radius is same, 2.5, at the upper face and lower face, is specified. Instead of command code G87, an address Q, for example, Q3.5, can be used to command to set the radius on the lower surface to 3.5.

Next, in the block N5, command code for linear interpolation (G01) is used to perform processing until the position of X = 10, Y = 22.5 is reached.

An example of a program obtained by converting the abovementioned conversion source program is shown below.

| | |
|---|---|
| N2 | G90 G01 G42 G52 X0. Y5. |
| (G52 is added later) | |
| N3 | X10. G60 R2.5 |
| N5 | Y22.5 T-10 |

In the block N2 of the above mentioned converted program, "G90 G01 G42 X0. Y5. " is same as that of the conversion source program, because that part of the conversion target program is applied to the corresponding command in the conversion destination program used in a wire cut electrical discharge machine manufactured by a different maker.

However, in the case of the processing program by the wire cut electrical discharge machine manufactured by a different maker, taper inclination direction is directed using command code G51 or command code G52 in the block corresponding to command code G42, thus it is detected that the taper angle is directed as A-10. when converting the block N4, and command code G52 for taper inclination is output to the preceding block N2.

Command code G51 is a command to incline the upper side of the wire to the left, facing the traveling direction, and command code G52 is a command for inclining the upper side of wire to the right. In this case, command code G52 is used to incline the upper side of the wire to the right, and the value of the angle is set to a minus value, thus, as a result, the upper side of the wire is inclined to the left. It shouldbenoted that the convertedprogram may be used to output command code G51, and to convert the numeral of the angle from the minus value, which is the original value, into the plus value.

Next, in the block N3, when the conversion target program is the processing program by the wire cut electrical discharge machine, the position of the corner (X10. Y5.) is directed, and the radius of the arc is directed to the address R, thus "X10. R2.5" is provided in the converted program. It should be noted that command codes G90, G01, G42, and G52 are modal (continuously effective), and thus are omitted. Moreover, the position of the Y axis "5 . " has not changed, and thus is omitted.

As a command denoting the same radius R at the top and bottom, command code G60 is output.

Next, the block N4 is not required in processing the machine with the conversion destination program, and thus is not output.

Next, in the block N5, a move command code for making a move to Y = 22.5 is output. Further, command codes G90, G01, G42, and G52 are modal (continuously effective), and thus are omitted. Moreover, the position of the X axis has not changed, and thus is omitted.

As the taper angle command, "T-10." is output. It should be noted that in the machine which is processed by means of the conversion destination program, the address is not A but T, thus the address T is required for the block in this machine.

In the example of the above program conversion, the number of blocks is changed by converting the NC programs between the processing machines produced by different manufacturers. Specifically, two blocks, N3 and N4, of the conversion source program are equivalent to one block, N3.

In addition, in the block N4 of the conversion source program, it is detected that the taper angle is directed as "A-10.," and, in the conversion destination program, command code G52 for directing the taper inclination angle to the right is output to N2 by going as far back as N2 from N4.

In the conventional program conversion, when converting the NC programs between theprocessingmachines produced by the different manufacturers, a certain character string is converted into other character string, thus the number of blocks in the conversion source program and the number of blocks in the conversion destination program do not change. Furthermore, if a certain command code is detected, an output command code is not set by going as far back as N2 from the block position in which the detected command code is described.

According to the program conversion of the present invention, the commands in the program are comprehended, and conversion is made to a program format, which corresponds to the function for the command and is suitable to a machine operated by the conversion destination program. Therefore, the program conversion of the present invention can respond to conversion in which the number of blocks changes, and a command can be output by going as far as back to a block.

When the number of blocks are changed by program conversion, it is necessary to compare the conversion source program with the conversion destination program and to display both programs in an easily understood manner. The comparison display is particularly required in the same wire cut electrical discharge machines to confirm whether the same processing is performed in both machines.

It should be noted in the abovementioned example that the plurality of blocks are converted into one block, but there are cases in which one block is converted into a plurality of blocks, or a plurality of blocks are converted into a plurality of blocks in different numbers.

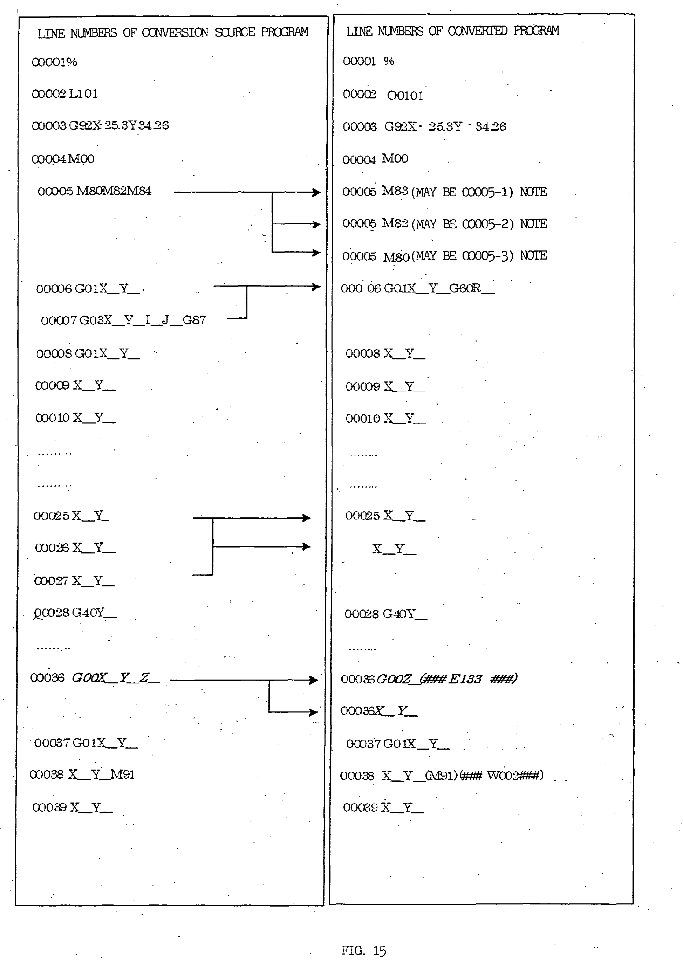

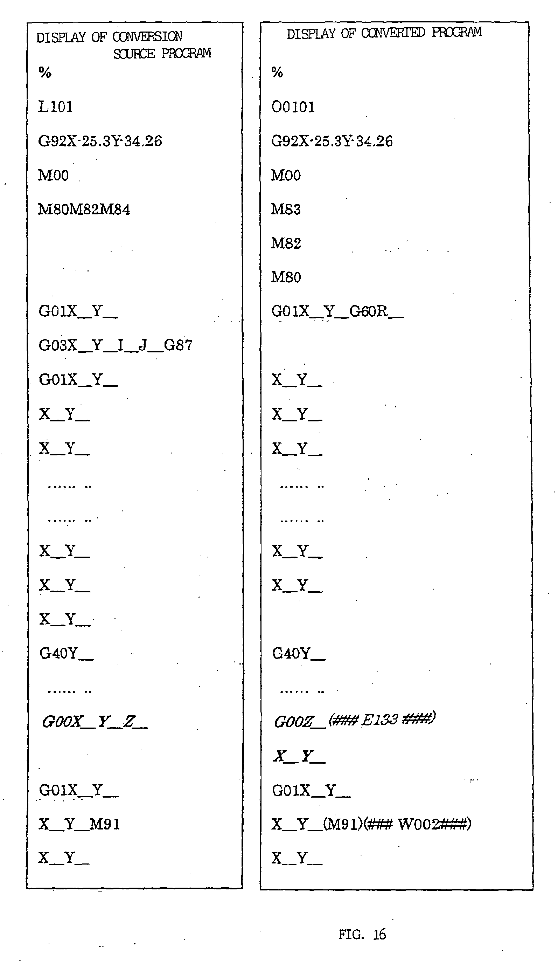

Next, regarding the comparison display, Fig. 15 and Fig. 16 are used to explain each embodiment of the relationship between the number of blocks of the conversion source program and the number of blocks of the conversion destination program.

First of all, as shown in Fig. 15, different line numbers are assigned to all blocks of the conversion source program. In comparison display, line numbers are not necessarily displayed.

A case in which one block of the conversion source program is converted into one block is explained. In this case, a line number assigned to a block of the conversion source program is i, the line number i is also assigned to a block of the converted program, and the block with the line number i of the conversion source program and the block with the line number i of the converted program are displayed in corresponding positions. Blocks "00001" through "00004" in Fig. 15 indicate such state.

Next, a case in which one block of the conversion source program is converted into N blocks of the conversion destination program is explained (N ≥ 2). In this case, a line number assigned to a block of the conversion source program is i, the line number i is also assigned to the N blocks of the converted program, and the block of the conversion source program and the first block of the converted program are displayed in corresponding positions.

The second block to the N^{th} block of the converted program are displayed in a rowbelow the first block of the converted program. In the meantime, a blank is displayed in the corresponding display position of the conversion source program. A block "00005" shown in Fig. 15 indicates this state. It should be noted that the line number "00005" of the converted block in Fig. 15 may be assigned to all three lines as shown in the figure, or "00005-1," "00005-2," and "00005-3" may be assigned to the three lines respectively.

Next, a case in which a plurality of blocks of the conversion source program are converted into one block in the conversion destination program is explained. Here, the block with the line number i to a block with the line number k in the conversion source program are converted into one block in the conversion destination program (k ≥ i + 1).

The first line number i in the plurality of blocks of the conversion source program is assigned to a block of the conversion destination program, and the first block of the plurality of blocks of the conversion source program and the block of the converted program are displayed in corresponding positions. The block with the line number (i + 1) to the block with the line number k in the conversion source program are displayed in a row below the block i of the conversion source program. In the meantime, a blank is displayed in the corresponding display position of the conversion source program. A block "00006" shown in Fig. 15 indicates this state.

Next, a case in which a plurality of blocks of the conversion source program are converted into a plurality of blocks in the conversion destination program is explained. Here, the block with the line number i to a block with the line number k in the conversion source program are converted into N blocks in the conversion destination program (k ≥ i + 1, N ≥ 2).

The first line number i in the plurality of blocks of the conversion source program is assigned to the first line of the plurality of blocks of the conversion destination program, and the block with the line number i of the conversion source program and the first block among the N blocks in the conversion destination program are displayed in corresponding positions. The block with the line number (i + 1) of the conversion source program and the second block of the conversion destination program are displayed in a row below the block with the line number i of the conversion source program and the first block of the conversion destination program respectively.

Hereinafter, a block with the line number (i + j) of the conversion source program and a (j + 1)^{th} of the converted program are displayed in a row below a block with the line number (i + j - 1) of the conversion source program and the j^{th}block of the conversion destination program respectively, and this display is repeated. This repetition of such display is performed until i + j > k and j > N are obtained. In the meantime, when i +j > k is obtained, a blank line is displayed in the display position of the conversion source program, and when j > N is obtained a blank line is displayed in the display position of the conversion destination program. Blocks "00025" though "00027" shown in Fig. 15 indicate this state.

It should be noted in the above description that the processing of applying the line numbers to the blocks of the conversion destination program includes a method of processing of storing the line numbers in an array, wherein, for example, when one block of the conversion source program is converted into a plurality of blocks (N blocks) in the conversion destination program, a two-dimensional array is prepared to store in a conversion result (i, 1) to a convers ion result (i, N).

Fig. 16 shows a state of comparison display using the blocks arranged in Fig. 15.

It should be noted that in this display an error or a warning (or a message) can be displayed differently by changing the display attributes. For example, the error can be displayed in slanted characters (italic), and the warning (message) can be displayed with an underline.

It should be noted here that the error is displayed in cases where there is a possibility that the processing is not performed properly, for example, in a case where the operations of the machine are different before and after the conversion. When the machine implementing the processing by means of the conversion destination program can operate only in the Z axis although simultaneous movement in three axes of X, Y, and Z is instructed, movement is directed separately in the Z axis and XY axes to perform operation. In such a case, the processing by the conversion destination program is not guaranteed.

Moreover, the warning (message) is displayed for alerting because the converted program is different from the conversion source program although the processing can be performed properly. For example, the M code (M91) related to the processing speed of the conversion source program is not required in operation of the machine using the conversion destination program. This is because the actual processing speed of the machine is monitored and automatically adjusted to optimal speed in the conversion destination program.

Although the display of the warning is unnecessary, a comment with parentheses is output so that the source program can understands the comment .

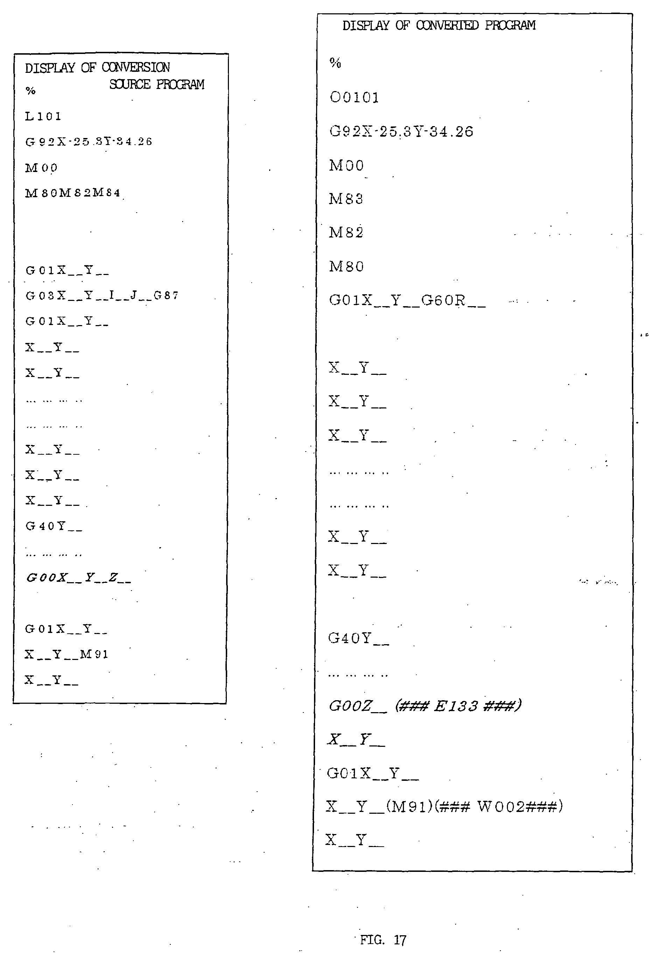

It should be noted in the present invention that "displayed in corresponding positions" means, as shown in Fig. 16, not only displaying the conversion source program and the converted program side by side in the same size, or displaying the programs which are functionally identical in the positions on the same level in a vertical direction, but also displaying in different sizes with a distance therebetween as shown in Fig. 17. In the present invention, when the relative display position in the display of the conversion source program and the relative display position in the display of the converted program are identical, "displayed in corresponding positions" applies.

As described above, the technology of the present invention can be applied not only to wire cut electrical discharge machines but also to processing devices which perform processing by means of a processing program such as the NC program.

## Claims

1. A program conversion apparatus for converting a first NC program for processing a workpiece using a first processing machine into a second NC program for processing the workpiece using a second processing machine, the program conversion apparatus comprising:
analysis means for analyzing the first NC program; and
conversion means for converting the first NC program into the second NC program on the basis of an analysis result obtained from the analysis means,
wherein the analysis means analyzes one or a plurality of blocks of the first NC program, and the conversion means converts the one or plurality of blocks of the first NC program into one or a plurality of blocks of the second NC programs corresponding to the one or plurality of blocks of the first NC program, on the basis of the analysis result.

2. The program conversion apparatus according to claim 1, wherein the analysis means analyzes the blocks of the first NC program one by one to extract a function directed by the block, and extracts a command corresponding to the extracted function in the second NC program, and
the conversion means converts the block of the first NC program into the block of the second NC program by means of the extracted command .

3. The program conversion apparatus according to claim 1, further comprising display means for displaying the first NC program before conversion and the converted NC program, wherein the display means displays one or a plurality of blocks of the first NC program before conversion and one or a plurality of blocks of the second NC program after conversion corresponding to the blocks of the first NC program, on a display screen, so as to relate the blocks to each other.

4. The program conversion apparatus according to claim 3, wherein, when one block of the first NC program before conversion corresponds to a plurality of blocks of the second NC program after conversion, the display means displays the one block of the first NC program before conversion and the first block among the plurality of blocks of the second NC program after conversion, on the same level on the display screen, and blank lines in the number corresponding to at least the number of the plurality of blocks of the second NC program after conversion are disposed in an area following the one block of the first NC program before conversion.

5. The program conversion apparatus according to claim 3, wherein, when a plurality of blocks of the first NC program before conversion correspond to one block of the second NC program after conversion, the display means displays the first block among the plurality of blocks of the first NC program before conversion and the one block of the second NC program after conversion, on the same level on the display screen, and blank lines in the number corresponding to at least the number of the plurality of blocks of the first NC program before conversion are disposed in an area below the one block of the second NC program after conversion.

6. The program conversion apparatus according to claim 2, wherein, when a plurality of blocks of the first NC program before conversion correspond to a plurality of blocks of the second NC program after conversion, the display means displays the first block among the plurality of blocks before conversion and the first block among the plurality of blocks after conversion, on the same level on the display screen, and blank lines in the number corresponding to the difference between the number of blocks before conversion and the number of blocks after conversion are disposed in any one of the blocks before conversion and the blocks after conversion, whichever is less in number.

7. The program conversion apparatus according to claim 3, wherein, when various command codes for generating the blocks of the second NC program after conversion do not have a function included in the blocks of the first NC program before conversion or an equivalent function, the analysis means causes the display means to display an error in relation to such blocks.

8. The program conversion apparatus according to claim 3, wherein, when the detail of the program for the block of the first NC program before conversion and the detail of the program for the block of the second NC program after conversion are different, and a function of the block of the first NC program before conversion and a function of the block of the second NC program after conversion are equivalent, the analysis means causes the display means to display a message indicating that the detail of at least one of the blocks of the program after conversion is different from the detail of the blocks of the program before conversion.

9. The program conversion apparatus according to claim 7 or 8, wherein the display means displays the error or message in a display pattern corresponding to the displayed detail.

10. The program conversion apparatus according to claim 3, wherein the display means displays the first NC program and/or the second NC program in a display pattern corresponding to a command code.

11. The program conversion apparatus according to claim 3, wherein the second NC program after conversion is editable, and
the display means displays the second NC program after editing in contrast with the first NC program before conversion.

12. The program conversion apparatus according to claim 1, wherein the program conversion apparatus is incorporated in an electrical discharge machine.

13. The program conversion apparatus according to claim 1, wherein the program conversion apparatus is incorporated in a general purpose personal computer.
